# FASCICULE DE BREVET EUROPEEN

(11) **EP 0 424 184 B1**
(45) Date de publication et mention de la délivrance du brevet: **17.05.1995**
(21) Numéro de dépôt: 90401565.8
(22) Date de dépôt: 08.06.1990
(51) Int. Cl.: F16C 19/52, G01P 3/44

(54) **Roulement ou palier équipé d'un dispositif détecteur de vitesse**
Wälz- oder Wellenlager, welches mit einer Geschwindigkeitsmessvorrichtung ausgestattet ist
Rolling bearing or bearing equipped with a speed detection device

(30) Priorité: 16.10.1989 US 422218
(43) Date de publication de la demande: 24.04.1991
(60) Demande divisionnaire: 94400205.4
(73) Titulaire: S.N.R. ROULEMENTS, 74010 Annecy Cédex (FR)
(72) Inventeur: Faye, Bradley D., Goshen CT 06756 (US); Hilby, James A., Watertown, CT 06795 (US); Hajzler, Christian, F-74000 Annecy (FR); Alff, Denis, F-74000 Annecy (FR)
(74) Mandataire: Ernst-Schonberg, Michel

(56) Documents cités:
- US-A- 4 262 527
- US-A- 4 778 286
- US-A- 4 864 231
- US-A- 4 865 468

## Description

La présente invention concerne un roulement ou palier antifriction à deux rangées de corps roulants équipé d'un dispositif détecteur de vitesse qui délivre un signe de sortie selon le préambule de la revendication 1. L'invention concerne plus particulièrement un moyen capteur de vitesse pour roulements antifriction montés sur un arbre tournant dont on peut régler la vitesse par l'intermédiaire d'un système d'asservissement en utilisant un signe de vitesse comme entrée de base de ce système. La présente invention trouve son application, tout particulièrement, sur un roulement de roue de véhicule automobile, pour délivrer un signal de vitesse, par exemple à un système antiblocage des freins ou à un système antipatinage des roues du véhicule.

L'industrie automobile exige que dans ces roulements, le capteur de vitesse, le codeur correspondant et tous les éléments de roulement soient protégés de l'environnement, par exemple de l'eau, de la poussière et des débris du revêtement routier. Un des moyens consiste à placer le codeur entre deux rangées de corps roulants, puis à positionner le capteur de manière à ce qu'il soit centré sur le codeur.

La publication US-A 4.865.468 décrit un roulement et palier conforme au préambule de la revendication 1.

Le roulement est équipé d'un codeur placé dans un espace annulaire délimité entre deux rangées de corps roulants tandisque le capteur est introduit dans un perçage traversant la bague extérieure du roulement.

Un problème lié à l'état de la technique réside en ce que le codeur doit souvent supporter des contraintes axiales. On doit donc le réaliser en un matériau résistant, capable de supporter ces efforts.

On peut réduire le coût global d'un roulement en utilisant un codeur en matériau plus tendre, par exemple une bague en résine synthétique chargée de particules magnétiques.

Un roulement ou palier selon l'invention, est defini dans la revendication 1.

Selon les caractéristiques des revendications il est possible d'utiliser des codeurs dont les formes et localisations contribuent à l'emploi de matériaux plus économiques.

Pour mieux comprendre la présente invention, on se reportera aux dessins et à la description détaillée ci-après :
- La figure 1 est une vue en coupe partielle d'un roulement équipé d'un capteur et d'un codeur montés entre deux rangées de corps roulants, le codeur étant monté sur un joint torique, emmanché à force sur la bague intérieure,
- La figure 2 est une vue en coupe partielle d'un roulement analogue à celui de la figure 2, dans lequel la bague intérieure comporte une partie en saillie, constituant un épaulement qui limite le jeu axial du codeur,
- La figure 3 est une vue en coupe partielle d'un roulement illustrant une variante de montage du codeur,

Les organes communs aux roulements représentés aux différentes figures sont repérés par les mêmes références. Par ailleurs, le terme "capteur" désigne plus généralement tout système de détection incorporant un ensemble capteur sans distinction de nombre.

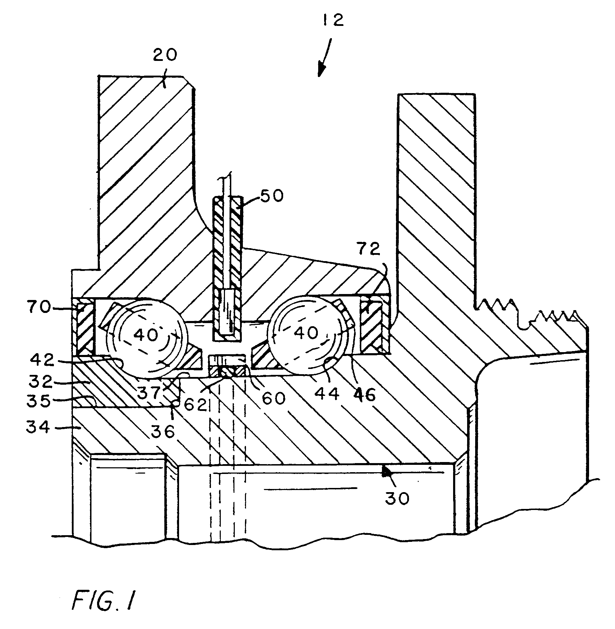

Le roulement 12, illustré sur la figure 1, possède une bague extérieure 20, fixe par rapport à un arbre tournant non illustré sur lequel est monté le roulement, une bague intérieure 30 montée sur l'arbre tournant et pouvant donc tourner par rapport à la bague extérieure 20, deux rangées annulaires de corps roulants 40, un capteur 50, un codeur 60, un joint torique 62, deux joints d'étanchéité 70 et 72 et un séparateur ou cage 46 pour chaque rangée de corps roulants 40. La bague intérieure 30 est constituée d'un premier élément 32 et d'un second élément 34. Cette structure double facilite la mise en place des billes 40 entre les bagues 20 et 30. Le premier élément 32 comporte une première piste intérieure 42 sur sa surface extérieure. Le second élément 34 comporte une première partie axiale 35, une seconde partie axiale 37, un premier épaulement 36, constitué à la jonction des parties axiales 35 et 37, et une seconde piste intérieure 44 à la surface extérieure de la partie axiale 37.

Le codeur 60 est monté sur le joint torique 62, emmanché a force sur la seconde partie axiale 37 de la bague intérieure 30. Ceci permet de rendre nettement moins strictes les tolérances dimensionnelles du codeur, le joint torique étant élastique et compensant donc la dispersion dimensionnelle relativement importante du codeur 60. Le joint torique 62 limite aussi le jeu axial du codeur, assurant donc son alignement axial sur le capteur 50. Les joints 70 et 72 protègent le codeur 60, le capteur 50 et les corps roulants 40 de l'environnement et permettent, le cas échéant, de maintenir de la graisse près des corps roulants.

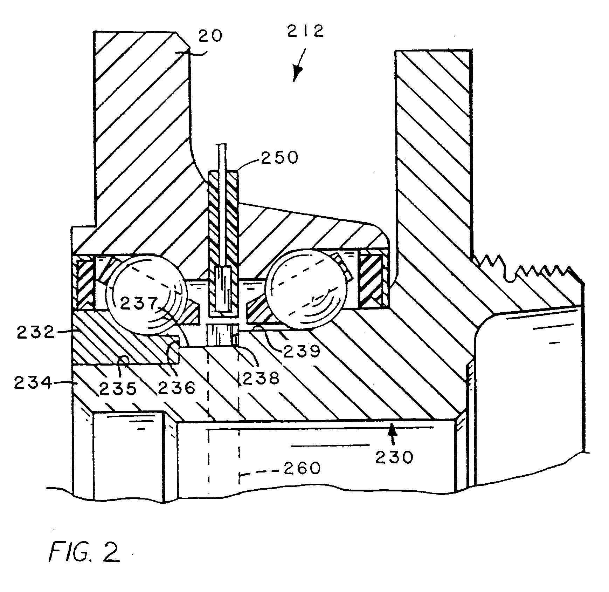

Si l'on se reporte à présent à la figure 2 , sur laquelle les références en correspondance avec celles de la figure 1 ont été majorées de 200, les roulements 212 et 213 sont analogues au roulement 12 de la figure 1. Néanmoins, leur bague intérieure 230 comporte une troisième partie axiale 239. Un second épaulement 238 est constitué à la jonction des parties axiales 237 et 239. Les codeurs 260 et 261 sont montés directement sur la seconde partie axiale 237 de la bague intérieure 230, et le jeu axial des codeurs est limité par le second épaulement 238. A la figure 2 , le codeur 260 et le capteur 250 sont séparés dans le sens radial.

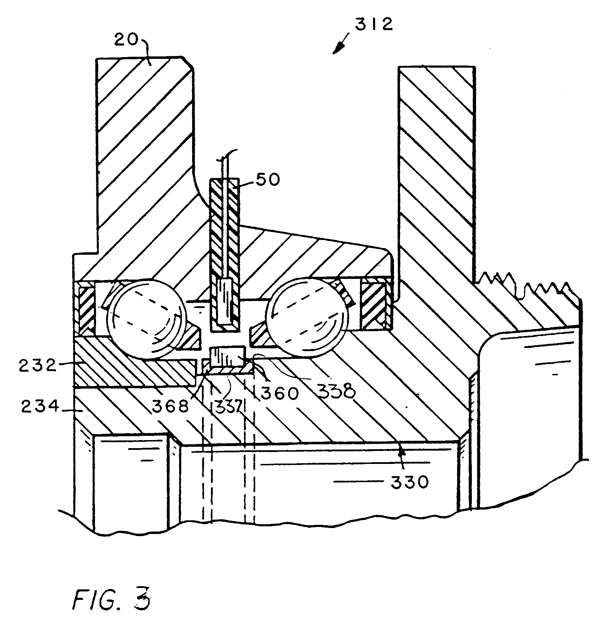

Si l'on se reporte à présent à la figure 3 , sur laquelle les références en correspondance avec celles de la figure 1 ont été majorées de 300, le roulement 312 est très semblable au roulement 212 de la figure 2. La seule différence entre les roulements 212 et 312 tient au montage du codeur 360 sur une bague de fixation annulaire 368 à section C, montée a force sur la seconde partie axiale 337 de la bague intérieure 330. La bague 368 s'appuie contre le second épaulement 338, limitant ainsi le jeu axial du codeur 360. On peut, en outre, réaliser la bague 368 en un matériau élastique, permettant ainsi de fabriquer le codeur 360 selon des tolérances dimensionnelles moins strictes.

## Revendications

1. Roulement ou palier antifriction à deux rangées de corps roulants équipé d'un dispositif détecteur de vitesse et destiné au montage sur un arbre tournant dans lequel :
- une bague extérieure (20) fixe par rapport à l'arbre comporte une surface intérieure et une surface extérieure,
- une bague intérieure (30, 230, 330) formée par un premier élément (32, 232) porteur d'une première piste (42) intérieure et par un deuxième élément (34, 234) comportant une première partie (35, 235) axiale, une deuxième partie (37, 237, 337) axiale et, le cas échéant, une troisième partie (239) axiale, un épaulement (36, 236) à la jonction de la première partie (35, 235) axiale avec la deuxième partie (37, 237, 337) axiale et une deuxième piste (44) intérieure sur la deuxième partie (35, 235) axiale ou, le cas échéant, la troisième partie (239) axiale, dans lequel le premier élément (32, 232) est disposé extérieurement à la première partie (35, 235) axiale du deuxième élément (34, 234) et prend appui sur l'épaulement (36, 236) et que la deuxième partie (37, 237, 337) axiale porte un codeur (60, 260, 360), caractérisé par le fait que le codeur (60) est monté sur un joint torique (62) avec une section en forme d'O qui entoure la deuxième partie (37) axiale du deuxième élément (34) de la bague intérieure (30)

2. Roulement selon la revendication 1, caractérisé par le fait que le deuxième élément (234) comporte un deuxième épaulement (238, 338) à la jonction de la troisième partie (239) axiale, avec la deuxième partie (237, 337) axiale sur laquelle le codeur (260, 360) prend axialement appui contre le deuxième épaulement (238, 338), dans le but de limiter le jeu axial du codeur et maintenir l'alignement axial du codeur sur un moyen capteur.

3. Roulement selon la revendication 2, caractérisé par le fait que le codeur (360) est monté sur une bague de fixation (368) sur la deuxième partie (337) et en appui sur le deuxième épaulement (338).

## Claims

1. Antifriction rolling bearing or bearing with two rows of rolling bodies provided with a speed detecting device and for mounting upon a rotating shaft in which:
- an external ring (20) which is fixed with respect to the shaft comprises an internal surface and an external surface,
- an internal ring (30, 230, 330) formed by a first element (32, 232) carrying a first internal track (42) and by a second element (34, 234) comprising a first axial part (35, 235), a second axial part (37, 237, 337) and, where applicable a third axial part (239), a collar (36, 236) at the junction of the first axial part (35, 235) with the second axial part (37, 237, 337), and a second internal track (44) on the second axial part (35, 235) or, where applicable, the third axial part (239), in which the first element (32, 232) is disposed externally of the first axial part (35, 235) of the second element (34, 234) and bears upon the collar (36, 236) and that the second axial part (37, 237, 337) carries an encoder (60, 260, 360), characterised by the fact that the encoder (60) is mounted upon an O-ring (62) with an O-shaped section which surrounds the second axial part (37) of the second element (34) of the internal ring (30).

2. Rolling bearing according to claim 1, characterised by the fact that the second element (234) comprises a second collar (238, 338) at the junction of a third axial part (239) with the second axial part (237, 337) upon which the encoder (260, 360) bears axially against the second collar (238, 338) in order to limit the axial clearance of the encoder and to maintain the axial alignment of the encoder upon a sensing means.

3. Rolling bearing according to claim 2, characterised by the fact that the encoder (360) is mounted upon a fixing ring (368) on a second part (337) and bearing against the second collar (338).

## Patentansprüche

1. Antifriktions-Wälz- oder Wellenlager mit zwei Reihen Wälzkörpern, das mit einer Geschwindigkeitsmeßvorrichtung versehen ist und zur Montage auf einer sich drohenden Welle dient, bei dem
- ein äußerer, bezuglich der Welle feststehender Ring (20), eine Innenfläche und eine Außenfläche aufweist,
- ein innerer Ring (30, 230, 330) aus einem ersten Teil (32, 232) besteht, das mit einer ersten inneren Gleitfläche (42) versehen ist und aus einem zweiten Teil (34, 234) besteht, das einen ersten axialen Abschnitt (35, 235) und einen zweiten axialen Abschnitt (37, 237, 337), und gegebenenfalls einen dritten axialen Abschnitt (239) aufweist, einen Vorsprung (36, 236) an der Verbindungsstelle des ersten axialen Abschnitts (35, 235) mit dem zweiten axialen Abschnitt (37, 237, 337) aufweist, wobei eine zweite innere Lauffläche (44) auf dem zweiten axialen Abschnitt (35, 235) oder gegebenenfalls dem dritten axialen Abschnitt (239) vorgesehen ist, und wobei das erste Teil (32, 232) außerhalb des ersten axialen Abschnitts (35, 235) des zweiten Teils (34, 234) angeordnet ist und sich auf dem Vorsprung (36, 236) abstützt, während der zweite axiale Abschnitt (37, 237, 337) mit einem Codierer (60, 260, 360) versehen ist, dadurch gekennzeichnet, daß der Codierer (60) auf einer torischen Dichtung (62) angeordnet ist mit einem O-förmigen Querschnitt, die den zweiten axialen Abschnitt (37) des zweiten Teils (34) des inneren Rings (30) umgibt.

2. Lager nach Anspruch 1, dadurch gekennzeichnet, daß das zweite Teil (234) einen zweiten Vorsprung (238, 338) an der Verbindungsstelle des dritten axialen Abschnitts (239) mit dem zweiten axialen Abschnitt (237, 337) aufweist, und daß der Codierer (260, 360) sich auf dem zweiten Vorsprung (238, 338) abstützt, um so das Axialspiel des Codierers zu begrenzen und die axiale Ausrichtung des Codierers zur Fühleranordnung aufrechtzuerhalten.

3. Lager nach Anspruch 2, dadurch gekennzeichnet, daß der Codierer (360) auf einem Befestigungsring (368) auf dem zweiten Abschnitt (337) angeordnet ist und sich auf dem zweiten Vorsprung (338) abstützt.
